# EUROPEAN PATENT SPECIFICATION

(11) **EP 2 466 953 B1**
(45) Date of publication and mention of the grant of the patent: **27.02.2019**
(21) Application number: 10816592.9
(22) Date of filing: 07.05.2010
(51) Int. Cl.: H04W 24/02, H04W 92/04

(54) **METHOD AND SYSTEM FOR REALIZING CONFIGURATION UPDATING AND EVOLVED NODE B AND MOBILITY MANAGEMENT ENTITY (MME)**
VERFAHREN UND SYSTEM ZUR DURCHFÜHRUNG VON KONFIGURATIONSAKTUALISIERUNGEN SOWIE ERWEITERTER BASISKNOTEN UND MOBILITÄTSMANAGEMENTEINHEIT (MME)
PROCÉDÉ ET SYSTÈME POUR LA RÉALISATION DE MISE À JOUR DE CONFIGURATION ET NOEUD B ÉVOLUÉ ET ENTITÉ DE GESTION DE MOBILITÉ (MME)

(30) Priority: 16.09.2009 CN 200910092713
(43) Date of publication of application: 20.06.2012
(73) Proprietor: ZTE Corporation, Shenzhen, Guangdong 518057 (CN)
(72) Inventor: SUN, Lianqiao, Shenzhen Guangdong 518057 (CN); SI, Wei, Shenzhen Guangdong 518057 (CN)
(74) Representative: Manitz Finsterwald Patentanwälte PartmbB
(86) International application number: PCT/CN2010/072539
(87) International publication number: WO 2011/032388

(56) References cited:
- CN-A- 101 272 624
- CN-A- 101 299 876
- US-A1- 2008 181 411
- 3GPP: "3rd Generation Partnership Project;Technical Specification Group Radio Access Network;Evolved Universal Terrestrial Radio Access (E-UTRA);Relay architectures for E-UTRA (LTE-Advanced)(Release 9)", 3GPP DRAFT; R2-095391 TR 36.806 V0.1.0 ON RELAY ARCHITECTURES FOR E-UTRA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Dublin; 20091116, 1 September 2009 (2009-09-01), XP050398387, [retrieved on 2009-10-29]
- INSTITUTE FOR INFORMATION INDUSTRY (III) ET AL: "Multi-hop type-I Relay", 3GPP DRAFT; R3-091634_MULTI-HOP_TYPE-I_RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090820, 20 August 2009 (2009-08-20), XP050353027, [retrieved on 2009-08-20]

## Description

### Technical Field

The present invention relates to a long term evolution (LTE) technology, and in particular, to a method and system for updating S1 interface configuration of an evolved nodeB (eNodeB, eNB) and an eNB and a mobility management entity (MME) in the LTE system.

### Background of the Related Art

In the LTE system, after S1 interfaces are set up in the eNB and its adjacent mobility management entities (MMEs) respectively, if S1 interface configuration information of the eNB changes, then the eNB will send an eNB configuration update message to the adjacent MMEs in which S1 interfaces have been set up.

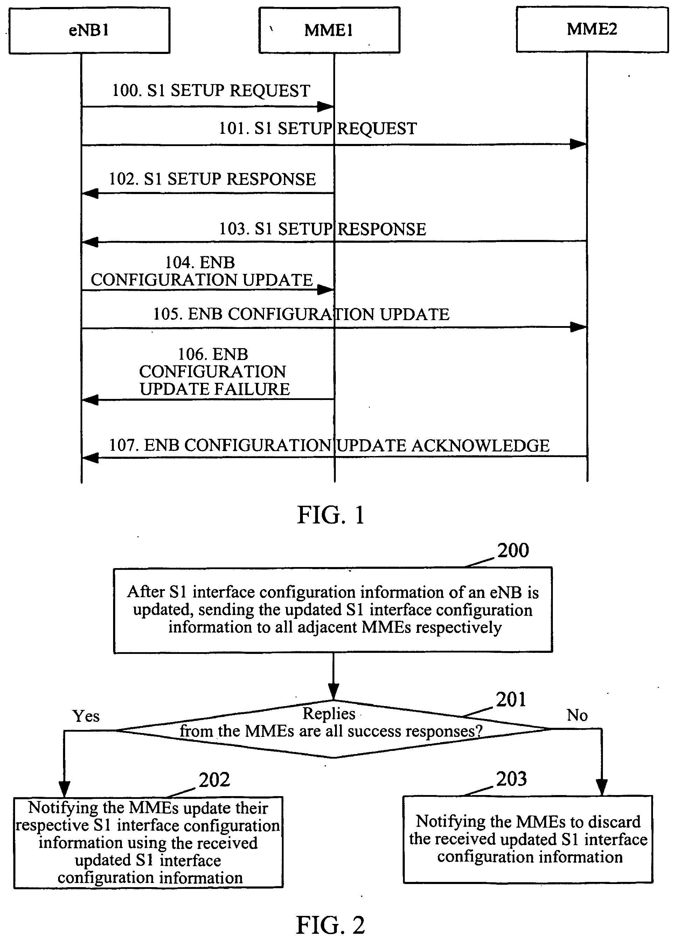

FIG. 1 is a flow chart of a method for updating S1 interface configuration of the existing eNB. Taking eNB1 with two adjacent MMEs (MME1 and MME2) as an example, as shown in FIG. 1, the method comprises the following steps.

In step 100, eNB1 sends an S1 setup request message to MME1.

In step 101, eNB1 sends the S1 setup request message to MME2.

In step 102, MME1 returns an S1 setup response message to eNB1.

In step 103, MME2 returns the S1 setup response message to eNB1.

So far, S1 interfaces of eNB1 and its adjacent MME1 and MME2 are set up successfully respectively.

In step 104, assuming that S1 interface configuration information of eNB1 is revised, since the S1 interface configuration information changes, eNB1 sends an eNB configuration update message to the adjacent MME1.

In step 105, eNB1 sends the eNB configuration update message to the adjacent MME2.

In step 106, after MME1 receives the ENB configuration update message, it sends an eNB configuration update failure message not carrying a time to wait information element (IE) to eNB1. According to the description in protocol 36.413, in this case, the eNB configuration update process between eNB1 and MME1 ends. That is to say, what MME1 uses is still the interacted S1 interface configuration information of eNB1 prior to this update.

In step 107, after MME2 receives the eNB configuration update message, it sends an eNB configuration update acknowledge message to eNB1, at this point, MME2 uses the updated new S1 interface configuration information of eNB1 to overlay the relevant S1 interface configuration information of eNB1 which is interacted successfully last time.

It is can be seen from the method for updating the S1 interface configuration of the existing eNB as shown in FIG. 1 that among different MMEs adjacent to eNB1, MME1 uses the S1 interface configuration information of eNB1 prior to this configuration update, and MME2 uses the S1 interface configuration information of eNB1 prior to this update. Thus, for the same eNB, different S1 interface configuration information exists in the adjacent MMEs, resulting in the problem that the S1 interface configuration information of the same eNB is inconsistent in all adjacent MMEs, and influencing the correct execution of other procedures of subsequent S1 interfaces.

The document 3GPP: "3rd Generation Partnership Project; Technical Specification Group Radio Access Network; Evolved Universal Terrestrial Radio Access (E-UTRA); Relay architectures for E-UTRA (LTE-Advanced) (Release 9)", 3GPP DRAFT; R2-095391 TR 36.806 V0.1.0 ON RELAY ARCHITECTURES FOR E-UTRA, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Dublin; 20091116, 1 September 2009 (2009-09-01) discloses relay architectures being discussed for E-UTRA (LTE-Advanced).

### Content of the Invention

In view of this, a main object of the present invention is to provide a method and system for updating configuration and an eNB and an MME so as to ensure the consistency of S1 interface configuration information of the eNB in all adjacent MMEs, thereby providing basic guarantee for the correctness of procedures of subsequent S1 interfaces.

In order to achieve the above object, the technical scheme of the present invention is implemented as below.

The present invention provides a method for updating configuration comprising the following steps of:
after S1 interface configuration information of an evolved nodeB (eNB) is updated, sending the updated S1 interface configuration information to all adjacent mobility management entities (MMEs) respectively;
determining whether replies from the MMEs are all success responses, and if yes, notifying the MMEs to update their respective S1 interface configuration information using the received updated S1 interface configuration information; and
otherwise, notifying the MMEs to discard the received updated S1 interface configuration information.

The determining whether the replies from the MMEs are all success responses means that:
if the replies from the MMEs are all eNB configuration update acknowledge messages, then a success response is indicated; if eNB configuration update failure messages are contained in the replies from the MMEs, then a failure response is indicated.

The notifying the MMEs to update their respective S1 interface configuration information using the received updated S1 interface configuration information means that:
the eNB sends a confirmation message carrying a success indication to the adjacent MMEs, which validate the received new S1 interface configuration information after receiving the confirmation message.

The notifying the MMEs to discard the received updated S1 interface configuration information means that:
the eNB sends a confirmation message carrying a failure indication to the adjacent MMEs, which do not store the received new S1 interface configuration information after receiving the confirmation message; and the eNB rolls back its own S1 interface configuration information.

The present invention provides a system for updating configuration at least comprising an evolved nodeB (eNB) and mobility management entities (MMEs) adjacent to the eNB, wherein
the eNB is configured to, after S1 interface configuration information is updated, send the updated S1 interface configuration information to the adjacent MMEs, receive replies from the MMEs, and when the replies of the MMEs are all success responses, notify the MMEs to update their respective S1 interface configuration information using the received updated S1 interface configuration information; when the replies of the MMEs are not all success responses, notify the MMEs to discard the received updated S1 interface configuration information, while rolling back its own S1 interface configuration information; and
the MMEs are configured to receive the updated S1 interface configuration information from the eNB and return a success or failure response to the eNB; after receiving a notification of updating their respective S1 interface configuration information using the received updated S1 interface configuration information from the eNB, validate the received updated S1 interface configuration information; and after receiving a notification of discarding the received updated S1 interface configuration information from the eNB, discard the received updated S1 interface configuration information.

There are one or more MMEs.

The present invention provides an evolved nodeB (eNB) configured to:
after S1 interface configuration information is updated, send the updated S1 interface configuration information to all adjacent mobility management entities (MMEs) respectively, receive replies from the MMEs, and when the replies of the MMEs are all success responses, notify the MMEs to update their respective S1 interface configuration information using the received updated S1 interface configuration information.

The eNB is further configured to, when the replies of the MMEs are not all success responses, notify the MMEs to discard the received updated S1 interface configuration information, while rolling back its own S 1 interface configuration information.

The present invention provides a mobility management entity (MME) configured to:
receive updated S1 interface configuration information from an evolved node B (eNB) and return a success or failure response to the eNB; after receiving a notification of updating its S1 interface configuration information using the received updated S1 interface configuration information from the eNB, validate the received updated S1 interface configuration information; and after receiving a notification of discarding the received updated S1 interface configuration information from the eNB, discard the received updated S1 interface configuration information.

There are one or more MMEs.

It can be seen from the technical scheme provided by the present invention that after the S1 interface configuration information of the eNB is updated, the updated S1 interface configuration information is sent to all adjacent MMEs respectively; when the replies of the MMEs are all success responses, the eNB notifies the MMEs to update their respective S1 interface configuration information using the received updated S1 interface configuration information; otherwise the MMEs are notified to discard the received updated S1 interface configuration information. In the method in accordance with the present invention, as long as there is one MME which cannot successfully update the S1 interface configuration information, the eNB will not allow all its adjacent MMEs to update the S1 interface configuration information, so as to solve the problem that the S1 interface configuration information of the same eNB in the adjacent MMEs is inconsistent due to some (one or more) adjacent MMEs being unable to accept successfully update of the S1 interface configuration information of the eNB, ensuring the consistency of the S1 interface configuration information of the eNB in the adjacent MMEs, thereby providing basic guarantee for the correctness of the subsequent procedures of the S1 interface.

### Brief Description of Drawings

FIG. 1 is a flow chart of a method for updating S1 interface configuration of the existing eNB;
FIG. 2 is a flow chart of a method for updating S1 interface configuration of an eNB in accordance with the present invention;
FIG. 3 is a structural diagram of a system for updating S1 interface configuration of an eNB in accordance with the present invention;
FIG. 4 is a flow chart of a method for updating S1 interface configuration of an eNB in accordance with the first embodiment of the present invention;
FIG. 5 is a flow chart of a method for updating S1 interface configuration of an eNB in accordance with the second embodiment of the present invention; and
FIG. 6 is a flow chart of a method for updating S1 interface configuration of an eNB in accordance with the third embodiment of the present invention.

### Preferred Embodiments of the Present Invention

FIG. 2 is a flow chart of a method for updating S1 interface configuration of an eNB in accordance with the present invention, which, as shown in FIG. 2, comprises the following steps.

In step 200, after the S1 interface configuration information of the eNB is updated, the updated S1 interface configuration information is sent to all adjacent mobility management entities (MMEs) respectively.

In this step, the eNB sends the updated S1 interface configuration information to the adjacent MMEs by sending an eNB configuration update message to all the MMEs respectively. However, at this point, in the MMEs, the received updated S1 interface configuration information of the eNB is not validated. The adjacent MMEs need to wait for a notification whether the configuration information is validated sent by the eNB.

In step 201, it is determined whether replies from the MMEs are all success responses, and if yes, step 202 is performed; otherwise, step 203 is performed.

According to the current regulations, the MMEs will return a response message to the eNB according to processing situations. If replies of the MMEs are all eNB configuration update acknowledge messages, then a success response is indicated; if there are eNB configuration update failure messages (not carrying a time to wait IE) in the replies of the MMEs, then a failure response is indicated.

In step 202, the MMEs are notified to update their respective S1 interface configuration information using the received updated S1 interface configuration information. The procedure ends.

In this step, the eNB sends a confirmation message carrying a success indication, such as an eNB configuration update completion message (it should be noted that it is only an example here, and other names may be used), to the adjacent MMEs respectively. After receiving the confirmation message, the adjacent MMEs validate the new S1 interface configuration information in the eNB configuration update message, that is, updates their respective S1 interface configuration information using the received updated S1 interface configuration information.

In step 203, the MMEs are notified to discard the received updated S1 interface configuration information.

If among the MMEs adjacent to the eNB, there are one or more MMEs which return the eNB configuration update failure message (not carrying the time to wait IE) to the eNB, then in this step, the eNB sends the eNB configuration update completion message carrying the failure indication to the adjacent MMEs. After receiving the confirmation message, the adjacent MMEs will not store the new S1 interface configuration information in the eNB configuration update message, and still use the S1 interface configuration information of the eNB which is successfully interacted with the eNB last time, that is, the MMEs will discard the received updated S1 interface configuration information. Moreover, the eNB rolls back its own S1 interface configuration information, that is, uses the S1 interface configuration information before initiating the eNB configuration update process.

It can be seen from the method in accordance with the present invention shown in FIG. 2, as long as there is one MME which cannot successfully update the S1 interface configuration information, the eNB will not allow all its adjacent MMEs to update the S1 interface configuration information, so as to solve the problem that the S1 interface configuration information of the same eNB in the adjacent MMEs is inconsistent due to some (one or more) adjacent MMEs being unable to accept successfully update of the S1 interface configuration information of the eNB, ensuring the consistency of the S1 interface configuration information of the eNB in the adjacent MMEs, thereby providing basic guarantee for the correctness of the subsequent procedures of the S1 interface.

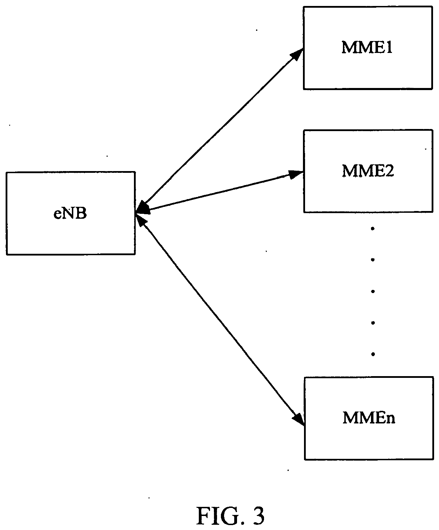

FIG. 3 is a structural diagram of a system for updating S1 interface configuration of an eNB in accordance with the present invention, which, as shown in FIG. 3, comprises at least an eNB and MMEs adjacent to the eNB, such as MME1, MME2, ......, MMEn, shown in FIG. 3.

The eNB is configured to, after the S1 interface configuration information is updated, send the updated S1 interface configuration information to the adjacent MMEs, receive replies from the MMEs, and when the replies of the MMEs are all success responses, notify the MMEs to update their respective S1 interface configuration information using the received updated S1 interface configuration information; when the replies of the MMEs are not all success responses, notify the MMEs to discard the received updated S1 interface configuration information, while rolling back its own S1 interface configuration information, that is, using the S1 interface configuration information before initiating the ENB configuration update process.

The MMEs are configured to receive the updated S1 interface configuration information from the eNB and return a success or failure response to the eNB; after receiving a notification of updating their respective S1 interface configuration information using the received updated S1 interface configuration information from the eNB, validate the received updated S1 interface configuration information; and after receiving a notification of discarding the received updated S1 interface configuration information from the eNB, discard the received updated S1 interface configuration information.

The present invention further provides an eNB and MMEs.

The eNB is configured to, after S1 interface configuration information is updated, send the updated S1 interface configuration information to all adjacent MMEs respectively, receive replies from the MMEs, and when the replies of the MMEs are all success responses, notify the MMEs to update their respective S1 interface configuration information using the received updated S1 interface configuration information.

The eNB is further configured to, when the replies of the MMEs are not all success responses, notify the MMEs to discard the received updated S1 interface configuration information, while rolling back its own S1 interface configuration information.

The MMEs are configured to receive updated S1 interface configuration information from an eNB and return a success or failure response to the eNB; after receiving a notification of updating their respective S1 interface configuration information using the received updated S1 interface configuration information from the eNB, validate the received updated S1 interface configuration information; and after receiving a notification of discarding the received updated S1 interface configuration information from the eNB, discard the received updated S1 interface configuration information.

There are one or more MMEs.

The method of the present invention is described in detail in combination with several embodiments hereinafter.

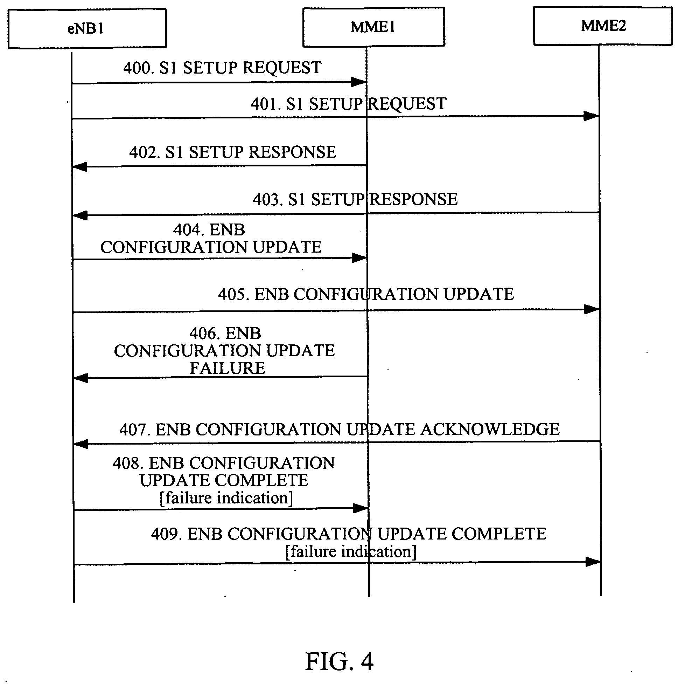

FIG. 4 is a flow chart of a method for updating S1 interface configuration of an eNB according to the first embodiment of the present invention. In the first embodiment, assuming that eNB1 has 2 adjacent MMEs (MME1 and MME2), and a scenario where MME 1 returns an eNB configuration update failure message (not carrying a time to wait IE) and MME2 returns an ENB configuration update acknowledge message is described. As shown in FIG. 4, the method comprises the following steps.

In step 400, eNB1 sends an S1 setup request message to MME1.

In step 401, eNB1 sends an S1 setup request message to MME2.

In step 402, MME1 returns an S1 setup response message to eNB1.

In step 403, MME2 returns an S1 setup response message to eNB1.

So far, S1 interfaces of eNB1 and the adjacent MME1 and MME2 are set up successfully.

In step 404, eNB1 sends an eNB configuration update message to the adjacent MME1, and waits for the response of the adjacent MME1.

In step 405, eNB1 sends an eNB configuration update message to the adjacent MME2, and waits for the response of the adjacent MME2.

In step 406, eNB1 receives the eNB configuration update failure message (not carrying the time to wait IE) from MME1.

In step 407, eNB1 receives the eNB configuration update acknowledge message from MME2.

In step 408, eNB1 sends an eNB configuration update completion message carrying a failure indication to MME1, and MME1 still uses the S1 interface configuration information which is interacted successfully last time.

In step 409, eNB1 sends the eNB configuration update completion message carrying the failure indication to MME2, and MME2 still uses the S1 interface configuration information which is interacted successfully last time.

Meanwhile, eNB1 rolls back its own S1 interface configuration information, and uses the S1 interface configuration information before initiating the eNB configuration update process.

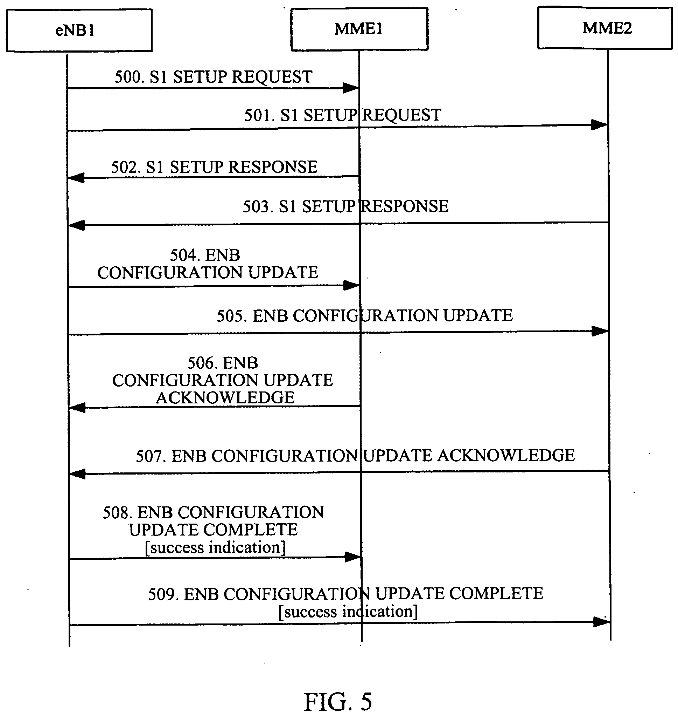

FIG. 5 is a flow chart of a method for updating S1 interface configuration of an eNB according to the second embodiment of the present invention. In the second embodiment, assuming that eNB1 has 2 adjacent MMEs (MME1 and MME2), and a scenario where both MME1 and MME2 return an ENB configuration update acknowledge message is described. As shown in FIG. 5, the method comprises the following steps.

In step 500, eNB1 sends an S1 setup request message to MME1.

In step 501, eNB1 sends an S1 setup request message to MME2.

In step 502, MME1 returns an S1 setup response message to eNB1.

In step 503, MME2 returns an S1 setup response message to eNB1.

So far, S1 interfaces of eNB1 and the adjacent MME1 and MME2 are set up successfully.

In step 504, eNB1 sends an eNB configuration update message to the adjacent MME1, and waits for the response of the adjacent MME1.

In step 505, eNB1 sends an eNB configuration update message to the adjacent MME2, and waits for the response of the adjacent MME2.

In step 506, eNB1 receives the eNB configuration update acknowledge message from MME1. At this point, the new S1 interface configuration is not validated at MME1.

In step 507, eNB1 receives the eNB configuration update acknowledge message from MME2. At this point, the new S1 interface configuration is not validated at MME2.

In step 508, eNB1 sends an eNB configuration update completion message carrying a failure indication to MME1, and after MME1 receives the message, the new S1 interface configuration is validated at MME1.

In step 509, eNB1 sends the eNB configuration update completion message carrying the failure indication to MME2, and after MME2 receives the message, the new S1 interface configuration is validated at MME2.

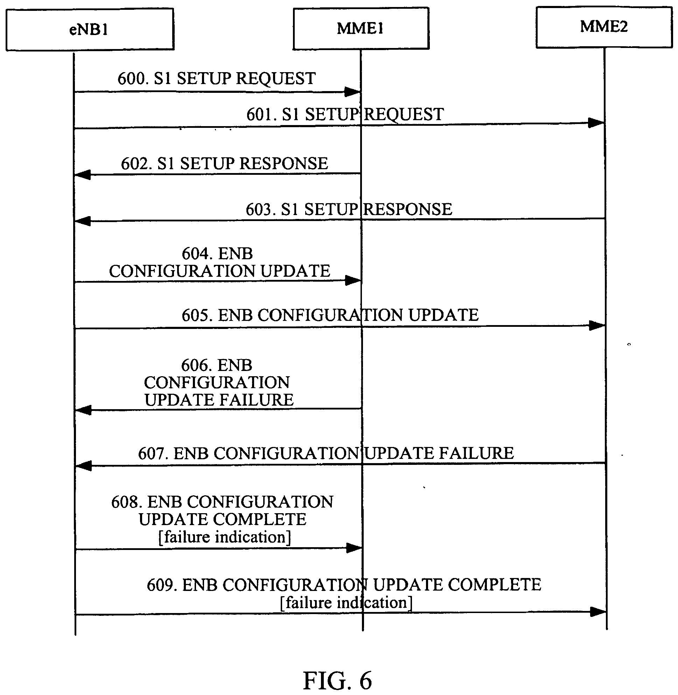

FIG. 6 is a flow chart of a method for updating S1 interface configuration of an eNB according to the third embodiment of the present invention. In the third embodiment, assuming that eNB1 has 2 adjacent MMEs (MME1 and MME2), and a scenario where both MME1 and MME2 return an eNB configuration update failure message (not carrying a time to wait IE) is described. As shown in FIG. 6, the method comprises the following steps.

In step 600, eNB1 sends an S1 setup request message to MME1.

In step 601, eNB1 sends an S1 setup request message to MME2.

In step 602, MME1 returns an S1 setup response message to eNB1.

In step 603, MME2 returns an S1 setup response message to eNB1.

So far, S1 interfaces of eNB1 and the adjacent MME1 and MME2 are set up successfully.

In step 604, eNB1 sends an eNB configuration update message to the adjacent MME1, and waits for the response of the adjacent MME1.

In step 605, eNB1 sends an eNB configuration update message to the adjacent MME2, and waits for the response of the adjacent MME2.

In step 606, eNB1 receives the eNB configuration update failure message (not carrying the time to wait IE) from MME1. At this point, the new S1 interface configuration of eNB1 is not validated at MME1.

In step 607, eNB1 receives the eNB configuration update failure message (not carrying the time to wait IE) from MME2. At this point, the new S1 interface configuration of eNB1 is not validated at MME2.

In step 608, eNB1 sends an eNB configuration update completion message carrying a failure indication to MME1, and MME1 still uses the S1 interface configuration information which is interacted successfully last time.

In step 609, eNB1 sends the eNB configuration update completion message carrying the failure indication to MME2, and MME2 still uses the S1 interface configuration information which is interacted successfully last time.

Meanwhile, eNB1 rolls back its own S1 interface configuration information, and uses the S1 interface configuration information before initiating the eNB configuration update process.

The above description is only the preferred embodiments of the present invention and is not intended to limit the protection scope of the present invention.

## Claims

1. A method for updating the S1 interface configuration of an evolved nodeB comprising the following steps, performed by the eNB, of:
after S1 interface configuration information of an evolved nodeB, eNB, is updated, sending the updated S1 interface configuration information to all adjacent mobility management entities, MMEs, respectively;
determining whether replies from the MMEs are all success responses, and if yes, notifying the MMEs to update their respective S1 interface configuration information using the received updated S1 interface configuration information; and
otherwise, notifying the MMEs to discard the received updated S1 interface configuration information.

2. The method according to claim 1, wherein the determining whether the replies from the MMEs are all success responses means that:
if the replies from the MMEs are all eNB configuration update acknowledge messages, then a success response is indicated; if eNB configuration update failure messages are contained in the replies from the MMEs, then a failure response is indicated.

3. The method according to claim 1 or 2, wherein the notifying the MMEs to update their respective S1 interface configuration information using the received updated S1 interface configuration information means that:
the eNB sends a confirmation message carrying a success indication to the adjacent MMEs, which validate the received new S1 interface configuration information after receiving the confirmation message.

4. The method according to claim 1 or 2, wherein the notifying the MMEs to discard the received updated S1 interface configuration information means that:
the eNB sends a confirmation message carrying a failure indication to the adjacent MMEs, which do not store the received new S1 interface configuration information after receiving the confirmation message; and the eNB rolls back its own S1 interface configuration information.

5. A system for updating the S1 interface configuration of an evolved nodeB at least comprising an evolved nodeB, eNB, and mobility management entities, MMEs, adjacent to the eNB, wherein
the eNB is configured to, after S1 interface configuration information is updated, send the updated S1 interface configuration information to the adjacent MMEs, receive replies from the MMEs, and when the replies of the MMEs are all success responses, notify the MMEs to update their respective S1 interface configuration information using the received updated S1 interface configuration information; when the replies of the MMEs are not all success responses, notify the MMEs to discard the received updated S1 interface configuration information, while rolling back its own S1 interface configuration information; and
the MMEs are configured to receive the updated S1 interface configuration information from the eNB and return a success or failure response to the eNB; after receiving a notification of updating their respective S1 interface configuration information using the received updated S1 interface configuration information from the eNB, validate the received updated S1 interface configuration information; and after receiving a notification of discarding the received updated S 1 interface configuration information from the eNB, discard the received updated S 1 interface configuration information.

6. The system according to claim 5, wherein there are one or more MMEs.

7. An evolved nodeB, eNB, wherein
the eNB is configured to, after S1 interface configuration information is updated, send the updated S1 interface configuration information to all adjacent mobility management entities, MMEs, respectively, receive replies from the MMEs, and when the replies of the MMEs are all success responses, notify the MMEs to update their respective S1 interface configuration information using the received updated S1 interface configuration information.

8. The eNB according to claim 7, wherein the eNB is further configured to, when the replies of the MMEs are not all success responses, notify the MMEs to discard the received updated S1 interface configuration information, while rolling back its own S1 interface configuration information.

9. A mobility management entity, MME, wherein
the MME is configured to receive updated S1 interface configuration information from an evolved node B, eNB, and return a success or failure response to the eNB; after receiving a notification of updating its S1 interface configuration information using the received updated S1 interface configuration information from the eNB, validate the received updated S1 interface configuration information; and after receiving a notification of discarding the received updated S1 interface configuration information from the eNB, discard the received updated S1 interface configuration information.

10. The MME according to claim 9 wherein there are one or more MMEs.

## Patentansprüche

1. Verfahren zum Aktualisieren der S1-Schnittstellenkonfiguration eines evolved NodeB, eNB, das die folgenden, von dem eNB ausgeführten Schritte umfasst, dass:
nachdem S1-Schnittstellenkonfigurationsinformationen eines evolved NodeB, eNB, aktualisiert wurden, die aktualisierten S1-Schnittstellenkonfigurationsinformationen jeweils an alle benachbarten Mobilitätsmanagemententitäten, MMEs, gesendet werden;
bestimmt wird, ob Antworten von den MMEs alle Erfolgsantworten sind, und wenn ja, die MMEs benachrichtigt werden, dass sie ihre jeweiligen S1-Schnittstellenkonfigurationsinformationen unter Verwendung der empfangenen aktualisierten S1-Schnittstellenkonfigurationsinformationen aktualisieren sollen; und
andernfalls die MMEs benachrichtigt werden, dass sie die empfangenen aktualisierten S1-Schnittstellenkonfigurationsinformationen verwerfen sollen.

2. Verfahren nach Anspruch 1, wobei das Bestimmen, ob die Antworten von den MMEs alle Erfolgsantworten sind, bedeutet, dass:
dann, wenn die Antworten von den MMEs alle eNB-Konfigurationsaktualisierungs-Bestätigungsbotschaften sind, eine Erfolgsantwort angezeigt wird; dann, wenn in den Antworten von den MMEs eNB-Konfigurationsaktualisierungs-Fehlerbotschaften enthalten sind, eine Fehlerantwort angezeigt wird.

3. Verfahren nach Anspruch 1 oder 2, wobei das Benachrichtigen, dass die MMEs ihre jeweiligen S1-Schnittstellenkonfigurationsinformationen unter Verwendung der empfangenen aktualisierten S1-Schnittstellenkonfigurationsinformationen aktualisieren sollen, bedeutet, dass:
der eNB eine Bestätigungsbotschaft, die eine Erfolgsanzeige trägt, an die benachbarten MMEs sendet, welche die empfangenen neuen S1-Schnittstellenkonfigurationsinformationen nach Empfang der Bestätigungsbotschaft validieren.

4. Verfahren nach Anspruch 1 oder 2, wobei das Benachrichtigen der MMEs, dass sie die empfangenen aktualisierten S1- Schnittstellenkonfigurationsinformationen verwerfen sollen, bedeutet, dass:
der eNB eine Bestätigungsbotschaft, die eine Fehleranzeige trägt, an die benachbarten MMEs sendet, welche die empfangenen neuen S1-Schnittstellenkonfigurationsinformationen nach Empfang der Bestätigungsbotschaft nicht speichern; und der eNB ein Rollback seiner eigenen S1-Schnittstellenkonfigurationsinformationen vornimmt.

5. System zum Aktualisieren der S1-Schnittstellenkonfiguration eines evolved NodeB, eNB, das zumindest einen evolved NodeB, eNB, und Mobilitätsmanagemententitäten, MMEs, benachbart zu dem eNB umfasst, wobei
der eNB ausgestaltet ist, um, nachdem S1-Schnittstellenkonfigurationsinformationen aktualisiert wurden, die aktualisierten S1-Schnittstellenkonfigurationsinformationen an die benachbarten MMEs zu senden, um Antworten von den MMEs zu empfangen, und um, wenn die Antworten der MMEs alle Erfolgsantworten sind, die MMEs zu benachrichtigen, dass sie ihre jeweiligen S1-Schnittstellenkonfigurationsinformationen unter Verwendung der empfangenen aktualisierten S1-Schnittstellenkonfigurationsinformationen aktualisieren sollen; wenn die Antworten der MMEs nicht alle Erfolgsantworten sind, die MMEs zu benachrichtigen, dass sie die empfangenen aktualisierten S1-Schnittstellenkonfigurationsinformationen verwerfen sollen, während er einen Rollback seiner eigenen S1-Schnittstellenkonfigurationsinformationen vornimmt; und
die MMEs ausgestaltet sind, um die aktualisierten S1-Schnittstellenkonfigurationsinformationen von dem eNB zu empfangen und um eine Erfolgs- oder Fehlerantwort an den eNB zurückzugeben; um nach Empfangen einer Benachrichtigung zum Aktualisieren ihrer jeweiligen S1-Schnittstellenkonfigurationsinformationen unter Verwendung der empfangenen aktualisierten S1-Schnittstellenkonfigurationsinformationen von dem eNB die empfangenen aktualisierten S1-Schnittstellenkonfigurationsinformationen zu validieren; und um nach Empfangen einer Benachrichtigung zum Verwerfen der empfangenen aktualisierten S1-Schnittstellenkonfigurationsinformationen von dem eNB die empfangenen aktualisierten S1-Schnittstellenkonfigurationsinformationen zu verwerfen.

6. System nach Anspruch 5, wobei es eine oder mehrere MMEs gibt.

7. evolved NodeB, eNB, wobei
der eNB ausgestaltet ist, um, nachdem S1-Schnittstellenkonfigurationsinformationen aktualisiert wurden, die aktualisierten S1-Schnittstellenkonfigurationsinformationen jeweils an alle benachbarten Mobilitätsmanagemententitäten, MMEs, zu senden, um Antworten von den MMEs zu empfangen, und um, wenn die Antworten der MMEs alle Erfolgsantworten sind, die MMEs zu benachrichtigen, dass sie ihre jeweiligen S1-Schnittstellenkonfigurationsinformationen unter Verwendung der empfangenen aktualisierten S1-Schnittstellenkonfigurationsinformationen aktualisieren sollen.

8. eNB nach Anspruch 7, wobei der eNB ferner ausgestaltet ist, um, wenn die Antworten der MMEs nicht alle Erfolgsantworten sind, die MMEs zu benachrichtigen, dass sie die empfangenen aktualisierten S1-Schnittstellenkonfigurationsinformationen verwerfen sollen, während er einen Rollback seiner eigenen S1-Schnittstellenkonfigurationsinformationen vornimmt.

9. Mobilitätsmanagemententität, MME, wobei
die MME ausgestaltet ist, um aktualisierte S1-Schnittstellenkonfigurationsinformationen von einem evolved NodeB, eNB, zu empfangen und um eine Erfolgs- oder Fehlerantwort an den eNB zurückzugeben; um nach dem Empfangen einer Benachrichtigung zum Aktualisieren ihrer S1-Schnittstellenkonfigurationsinformationen unter Verwendung der empfangenen aktualisierten S1-Schnittstellenkonfigurationsinformationen von dem eNB die empfangenen aktualisierten S1-Schnittstellenkonfigurationsinformationen zu validieren; und um nach Empfangen einer Benachrichtigung zum Verwerfen der empfangenen aktualisierten S1-Schnittstellenkonfigurationsinformationen von dem eNB die empfangenen aktualisierten S1-Schnittstellenkonfigurationsinformationen zu verwerfen.

10. MME nach Anspruch 9,
wobei es eine oder mehrere MMEs gibt.

## Revendications

1. Procédé de mise à jour de la configuration d'interface S1 d'un noeud B évolué, comprenant les étapes suivantes, effectuées par l'eNB, consistant à :
après que des informations de configuration d'interface S1 d'un noeud B évolué, eNB, ont été mises à jour, envoyer les informations de configuration d'interface S1 mises à jour à toutes les entités de gestion de mobilité, MME, adjacentes respectivement ;
déterminer si des réponses des MME sont toutes des réponses de succès, et le cas échéant, demander aux MME de mettre à jour leurs informations de configuration d'interface S1 respectives en utilisant les informations de configuration d'interface S1 mises à jour reçues ; et
sinon, demander aux MME de rejeter les informations de configuration d'interface S1 mises à jour reçues.

2. Procédé selon la revendication 1, dans lequel la détermination du fait de savoir si les réponses des MME sont toutes des réponses de succès signifie que :
si les réponses des MME sont toutes des messages d'accusé de réception de mise à jour de configuration d'eNB, alors une réponse de succès est indiquée ; si des messages d'échec de mise à jour de configuration d'eNB sont contenus dans les réponses des MME, alors une réponse d'échec est indiquée.

3. Procédé selon la revendication 1 ou 2, dans lequel la demande aux MME de mettre à jour leurs informations de configuration d'interface S1 respectives en utilisant les informations de configuration d'interface S1 mises à jour reçues signifie que :
l'eNB envoie un message de confirmation contenant une indication de succès aux MME adjacentes, qui valident les nouvelles informations de configuration d'interface S1 reçues après la réception du message de confirmation.

4. Procédé selon la revendication 1 ou 2, dans lequel la demande aux MME de rejeter les informations de configuration d'interface S1 mises à jour reçues signifie que :
l'eNB envoie un message de confirmation contenant une indication d'échec aux MME adjacentes, qui ne stockent pas les nouvelles informations de configuration d'interface S1 reçues après avoir reçu le message de confirmation ; et l'eNB rétablit ses propres informations de configuration d'interface S1.

5. Système de mise à jour de la configuration d'interface S1 d'un noeud B évolué comprenant au moins un noeud B évolué, eNB et des entités de gestion de la mobilité, MME, adjacentes à l'eNB, dans lequel
l'eNB est configuré pour, après que les informations de configuration d'interface S1 ont été mises à jour, envoyer aux MME adjacentes les informations de configuration d'interface S1 mises à jour, recevoir des réponses des MME et, lorsque les réponses des MME sont toutes des réponses de succès, demander aux MME de mettre à jour leurs informations de configuration d'interface S1 respectives en utilisant les informations de configuration d'interface S1 mises à jour reçues ; lorsque les réponses des MME ne sont pas toutes des réponses de succès, demander aux MME de rejeter les informations de configuration d'interface S1 mises à jour reçues, tout en rétablissant ses propres informations de configuration d'interface S1 ; et
les MME sont configurées pour recevoir les informations de configuration d'interface S1 mises à jour à partir de l'eNB et renvoyer une réponse de succès ou d'échec à l'eNB ; après avoir reçu une demande de mise à jour de leurs informations de configuration d'interface S1 respectives en utilisant les informations de configuration d'interface S1 mises à jour reçues à partir de l'eNB, valider les informations de configuration d'interface S1 mises à jour reçues ; et après avoir reçu une demande de rejet des informations de configuration d'interface S1 mises à jour reçues à partir de l'eNB, rejeter les informations de configuration d'interface S1 mises à jour reçues.

6. Système selon la revendication 5, dans lequel il y a une ou plusieurs MME.

7. Noeud B évolué, eNB, dans lequel
l'eNB est configuré pour, après que les informations de configuration d'interface S1 ont été mises à jour, envoyer les informations de configuration d'interface S1 mises à jour à toutes les entités de gestion de la mobilité, MME, adjacentes, respectivement, recevoir des réponses des MME, et lorsque les réponses des MME sont toutes des réponses de succès, demander aux MME de mettre à jour leurs informations de configuration d'interface S1 respectives en utilisant les informations de configuration d'interface S1 mises à jour reçues.

8. eNB selon la revendication 7, dans lequel l'eNB est en outre configuré pour, lorsque les réponses des MME ne sont pas toutes des réponses de succès, demander aux MME de rejeter les informations de configuration d'interface S1 mises à jour reçues, tout en rétablissant ses propres informations de configuration d'interface S1.

9. Entité de gestion de la mobilité, MME, dans laquelle
la MME est configurée pour recevoir des informations de configuration d'interface S1 mises à jour à partir d'un noeud B évolué, eNB, et renvoyer une réponse de succès ou d'échec à l'eNB ; après avoir reçu une demande de mise à jour de ses informations de configuration d'interface S1 en utilisant les informations de configuration d'interface S1 mises à jour reçues à partir de l'eNB, valider les informations de configuration d'interface S1 mises à jour reçues ; et après avoir reçu une demande de rejet des informations de configuration d'interface S1 mises à jour reçues à partir de l'eNB, rejeter les informations de configuration d'interface S1 mises à jour reçues.

10. MME selon la revendication 9, dans laquelle il y a une ou plusieurs MME.
